# EUROPEAN PATENT SPECIFICATION

(11) **EP 0 975 232 B1**
(45) Date of publication and mention of the grant of the patent: **19.06.2002**
(21) Application number: 98909238.2
(22) Date of filing: 13.03.1998
(51) Int. Cl.: A23C 9/123, A23C 9/15, A23C 9/12

(54) **FERMENTED MILK PRODUCT PRODUCTION PROCESS**
VERFAREN ZUR HERSTELLUNG VON SAUERMILCHPRODUKTEN
PROCEDE DE PRODUCTION DE PRODUIT LAITIER FERMENTE

(30) Priority: 17.03.1997 GB 9705456
(43) Date of publication of application: 02.02.2000
(73) Proprietor: UCB, S.A., 1070 Bruxelles (BE)
(72) Inventor: MARSHALL, Colin, Cumbria CA7 9ES (GB); SEALBY, Lesley, Cumbria CA13 9BU (GB); TAYLOR, Lewis, Wiltshire SN15 3XL (GB)
(74) Representative: Claisse, John Anthony, Dr.
(86) International application number: BE9800036
(87) International publication number: WO9841103

(56) References cited:
- EP-A- 0 360 612
- FR-A- 781 005
- US-A- 3 696 931
- US-A- 4 195 561
- US-A- 4 920 105

## Description

### Field of invention.

The invention relates to a self-rehydrating container adapted for the production of fermented milk products, to a process for the production of fermented milk product using a self-rehydrating container, to a container adapted thereto and to the fermented milk product produced as such.

### Background of the invention.

The use of yoghurts or fermented milk products in general as part of the human diet is perceived extremely beneficial for many reasons including:
Major bacterial contamination in the upper intestine are prevented by beneficial organisms colonisation;
Problems with lactose intolerance are reduced, due to lactose conversion;
antibiotics are produced locally by lactobacillus type bacteria;
certain minerals are potentially more available within the foodstuff for digestion;
fermented milk products have a better stability than equivalent milk products.

However, to prepare yoghurts or fermented milk products in general on the field is often difficult in many locations around the world. This is mostly due to contamination (poor hygiene and sanitation), and a lack of necessary heat stable organisms. Moreover, it is essential that the fermented milk product forming organisms can grow in the correct environment.

A secondary benefit of fermented milk product forming organisms is their probiotic property.

This is where growth of potential pathogenic organisms present in the food product is suppressed or severely lowered by the presence of large numbers of beneficial organisms due to their rapid growth, which is known as a colonisation effect. It has been explained that it is the low pH resulting from lactic acid production which prevents growth of harmful bacteria. The classic fermented milk product production process is known to the man skilled in the art. As much as the starter culture needs to be free of contaminating micro-organisms, it is indicated that the vessels wherein the fermented milk product is produced are as clean and disinfected as possible. Notwithstanding the fermented milk product producing bacteria have a colonising effect, other pathogenic micro-organisms might equally develop. This is certainly so when the temperature at which the fermented milk product is prepared is lower than 40-45°C.

US4195561-A describes a yoghurt maker comprising a yoghurt preparation wherein the preparation is hermetically contained within an envelope so that air and moisture are excluded. This preparation is composed of powdered milk and a dried lactobacillus culture. This document also discloses "mild", "regular" and "tart" yoghurts.

FR781005-A discloses a watertight bag containing sugar, soluble milk powder and microorganisms used in yoghurt-making. Additionally, this document describes food cream produced through the action of microorganisms on soluble milk powder.

US4920105-A describes a membrane pouch comprising a bag made of a semi-permeable membrane material which is permeable to water molecules and impermeable to viruses, bacteria and pyrogens, and containing sugars or dehydrated milk.

EP0360612-A describes a container having a selectively permeable membrane allowing water to enter the container by osmosis but preventing the passage into the container of microorganisms from the water, the container containing sugars and milk solids.

### Aims of the invention.

Taken into account the beneficial effects of a fermented milk product and the need to provide convenient and non-infected fermented milk product preparation vessels, especially in countries where pure water is not easily available and then the need for healthy food is very important, the present invention aims at providing a fermented milk product which allows yoghurt to be prepared on the field, even in a heavily biologically contaminated environment

It is another aim of the invention to exploit the colonising property of the beneficial fermented milk product cultures when the shelf life of rehydrated food products, potentially contaminated, need to be increased.

### Description of the invention.

According to the invention, a fermented milk product (such as yoghurt or buttermilk) is produced within a self-rehydrating container comprising, as at least a portion of its walls, a semi-permeable membrane.

In a preferred embodiment, the self-rehydrating container has two compartments as disclosed in our copending British patent application No. 9705455.5. In this comparted container, a compartment has water- and optionally oxygen-tight walls and contains a material to be rehydrated. Another compartment which is osmotically active has at least a portion of its walls which is semi-permeable allowing obtention of sterile water through the process of osmotically driven filtration as described in EP 360,612 or in USP 4,920,105, and contains osmotically active solutes. These compartments are separated by a non-permanent seal.

The container which is thus used in the fermented milk product production process of the present invention contains fermented milk product forming organisms and milk powder in admixture with a carbohydrate such as e.g. sugar which can function as the osmotically active solute.

In the variant using the comparted container, the fermented milk product forming organisms and the milk powder are retained in the watertight compartment and the osmotically active solute in the osmotically active compartment.

A "fermented milk product" according to the present invention may contain at least one of the following organisms: *Lactococcus lactic* (different sub-species), *Streptococcus* salivarus, *Streptococcus cremoris, Streptococcus lactis. Streptococcus diacetilactis* or *Streptococcus thermophilus* (different sub-species), *Lactobacillus bulgaricus* (different sub-species), *Leuconostoc cremoris* or *Leuconostoc lactis,* but other fermented milk product forming organisms are known from those skilled in the art. These organisms can be tailored to provide products of different consistency, i.e. liquid fermented milk product, thick fermented milk product, yoghurt, kefir, buttermilk, cheese-like products, etc.

Organism grades have been identified that have excellent shelf stability if kept dry and free from oxygen. The comparted container allows to fulfill this requirement as the watertight compartment may be further provided with excellent oxygen barrier and can be gas flushed to remove oxygen before closing. This container can further be contained itself within a hermetically sealed pack.

The self-rehydrating container is an indicated fermented milk product production vessel because the present applicant has found that using these organisms in conjunction with carbohydrate and dried skimmed milk, conversion of lactose into lactic acid and water is possible within the container. As a consequence, a reduction in pH is achieved along with a significant growth of said organisms. A combination of these effects helps suppress potential growth of pathogenic organisms within the pack and generates fermented milk products, substantially free from microbiological contaminants.

The carbohydrate which is needed for osmotically driven filtration to occur is favorably any carbohydrate which can sustain the yoghurt producing organisms in converting lactose into lactic acid and favour their growth. Preferably, the carbohydrate is lactose, sucrose, dextrose, and the like; most preferably one uses lactose.

Either solid or liquid fermented milk products which are perceived to have extreme consumption benefits can be produced within the self-rehydrating container using known cultures.

The milk powder contained in the container can be any dried milk type. Best results are obtained though with skimmed milk powder. A milk powder useful for specific applications such as High Energy Therapeutic Milk may equally be used.

The fermented milk product preparation process according to the invention comprises immersing a self-rehydrating container in water and leaving the container immersed until the filtered water has reached a sufficient level.

The osmotically active carbohydrate, the starter culture and the milk powder are contained altogether in the container. Once the container is immersed in water, rehydration of the different solutes starts and the starter cultures is activated. Using fermented milk product organisms in conjunction with a carbohydrate and dried milk powder results in a pH reduction and a significant growth of said organisms. The combination of these effects helps therefore to suppress potential growth of contaminating organisms within the bag and generates a fermented milk product.

In a variant, the fermented milk product production process according to the present invention comprises immersing a comparted self-rehydrating container in water, wherein the watertight compartment contains the starter culture and the milk powder, while the osmotically active compartment contains an osmotically active carbohydrate, leaving the container immersed until the filtered water has reached a sufficient level, breaking a non-permanent seal separating the two compartments, leaving the waterproof compartment to be filled with the sterile water of the other compartment, allowing the starter culture and the milk powder to dissolve, keeping the container at a temperature above 25°C, preferably between 30°C and 45°C depending on the thermal resistance of the fermented milk product forming organism and allowing for the fermented milk product to be formed.

When the starter culture is sufficiently resistant to be kept without particular measures to improve its shelf-stability and/or when the starter culture has a sufficiently high colonising potential (thus preventing the growth of contaminating micro-organisms), the single-compartment container is particularly suitable.

On the other hand, when it is necessary to keep the starter culture dry and free from oxygen to have an acceptable shelf life or when the colonising potential of the culture is not high enough, it is preferable to use the comparted container.

Normally, 6 to 7 hours are needed for a mixture of milk and starter culture to change into a fermented milk product. It is thus necessary to foresee a starter culture which can overgrow the contaminating micro-organisms potentially present in the other solutes during rehydration time, the milk powder/water/starter culture mixture is not at its full growing capacity.

A preferred "single compartment" self-rehydrating container comprises a composite semi-permeable membrane comprising a support layer with a relatively high molecular weight cut-off selected from the group consisting of cellulose, regenerated cellulose (CELLOPHANE® or cuprophane), benzoylated cellulose and collagen, and a thin layer with low molecular weight cut-off as disclosed in our copending British patent application 9705454.8. Preferably the thin layer consists of an hydrophilic polyurethane such as those which are conventionally used for covering textile with a protective coating which is waterproof but water vapour permeable. Lowering the molecular weight cut-off of the overall membrane structure allows for more solute compounds to be maintained within the milk solutions of the present invention, thus resulting in a more nutritious yoghurt especially when High Energy Therapeutic Milk is used for example.

It is well within the possibilities of the man in the art to develop more sophisticated fermented milk products by using for example additional beneficial micro-organisms (such as bifidus), additional solute powders (like fruit juice powder, thickeners, etc.) colouring agents, etc.

Again the colonising effect (pH and growth rate) of the fermented milk product organism will prevent the contaminating organisms possibly present in such solutes to develop.

Preferably, fermented-milk product organisms with pH lowering properties ensuring a pH decrease to pH 4 - 4.5 within 6 hours of rehydration are used.

The examples which follow illustrate the invention without any intention to limit its scope in any way. Yoghurt has been embodied as fermented milk product, but other kinds of fermented milk products are well within the scope of invention.

### Examples.

### Example 1

A container is prepared with a composite membrane consisting of a support membrane of regenerated cellulose film with a molecular weight cut-off of 1800 and of a thin hydrophilic polyurethane layer applied by direct gravure coating at 10 g/m² (wet weight).

The hydrophilic polyurethane is prepared as follows:
A solution of 133.02 g of polyethyleneglycol (PEG 600 (HOECHST)) having a molecular weight of about 600 and 79.00 g of 1,1'-methylenebis(4-isocyanatocyclohexane) in 342.00 g of toluene is introduced into a 2-liter four necked round bottomed flask equipped with a mechanical stirrer, a thermometer, an air condenser, a nitrogen inlet and a dropping funnel. The mixture is heated at 90°C while stirring and 25 mg of dibutyltinlaurate (DABCO T12 (AIR PRODUCTS)) as catalyst, is introduced. The reaction mixture is maintained at 90°C for 6 hours and then cooled.
A solution of 13.68 g of isophorone diamine in 350.00 g of isopropyl alcohol is introduced in a second 2-liter four necked round bottomed flask equipped with a mechanical stirrer, a thermometer, an air condenser, a nitrogen inlet and a dropping funnel. The content of the first flask is cooled at room temperature and it is then added slowly to the mixture alcohol/amine (second flask). Chain extention is complete after about 3 hours. 44.2 g of fumed silica (TS100 DEGUSA) and 50 g of toluene are added to the mixture.

### Example 2

Self-rehydrating containers containing Infant Formula Milk (IFM) 30.7 g or Therapeutic milk (TM) 36.5 g and different yoghurt forming organisms are placed in water. When the internal volume has reached 200 ml, 7.5 hours for Infant Formula Milk and 8.5 hours for Therapeutic milk, the bags are gently removed from water.

The bags are then stored at different temperatures:
in the fridge (at about + 4°C);
at ambient temperature (at 25°C, with a relative humidity of 75%);
in tropical oven (at 38°C, with a relative humidity of 90%C).

Hourly (over 24 hours) a bag is open and the pH of its content is measured.

The TABLE I shows the measured values of the pH.

The Blank samples do not contain any yoghurt forming organisms,
the strain 1 samples contain 6 mg of RA024 (from TEXEL) as yoghurt forming organisms;
the strain 2 samples contain 6 mg of MY087 (from TEXEL) as yoghurt forming organisms;
the strain 3 samples contain a mixture of 3 mg of RA024 (from TEXEL) and of 3 mg MY087 (from TEXEL) as yoghurt forming organisms;
the strain 4 samples contain 6 mg of MA016 (from TEXEL) as yoghurt forming organisms;

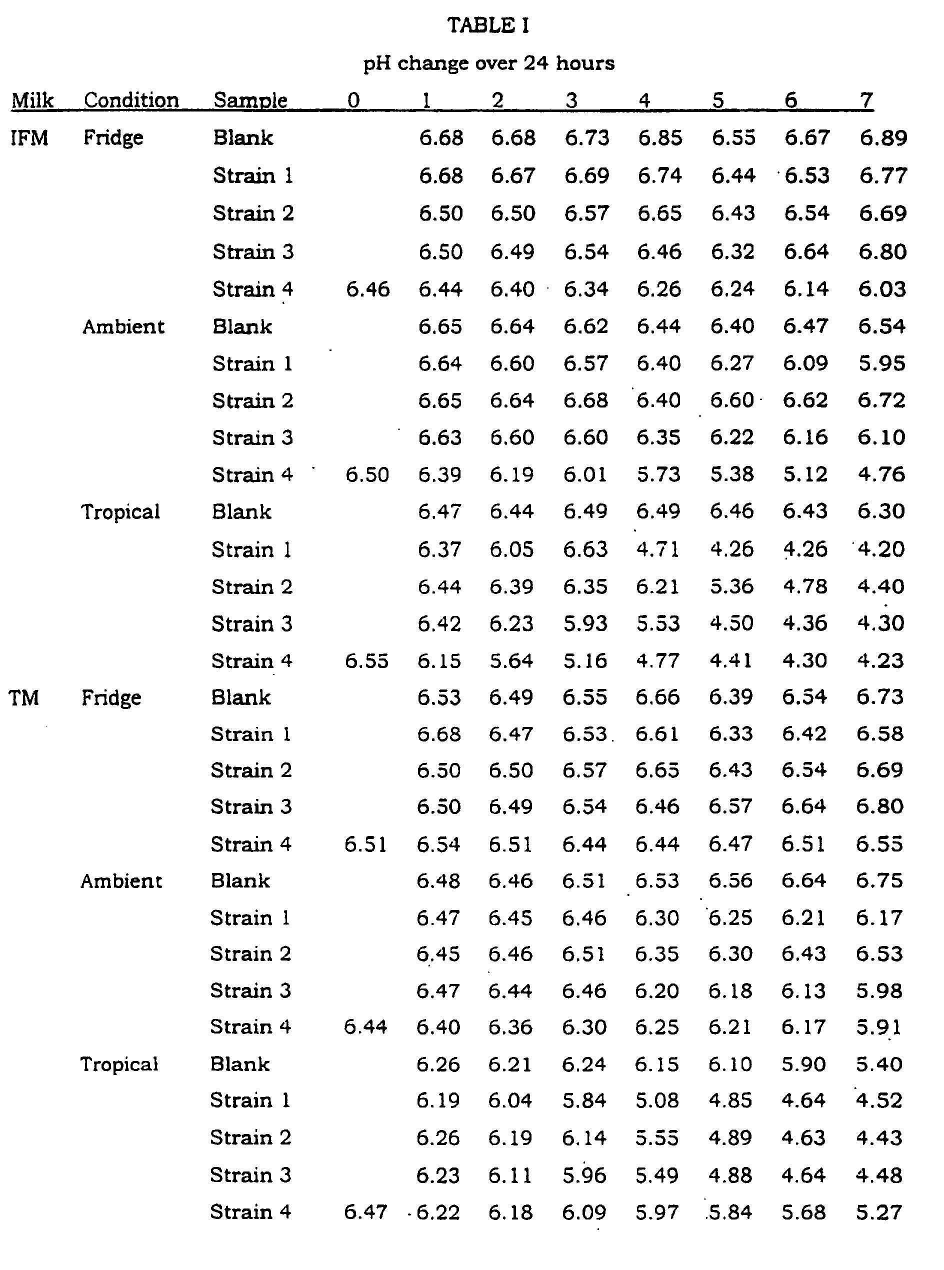

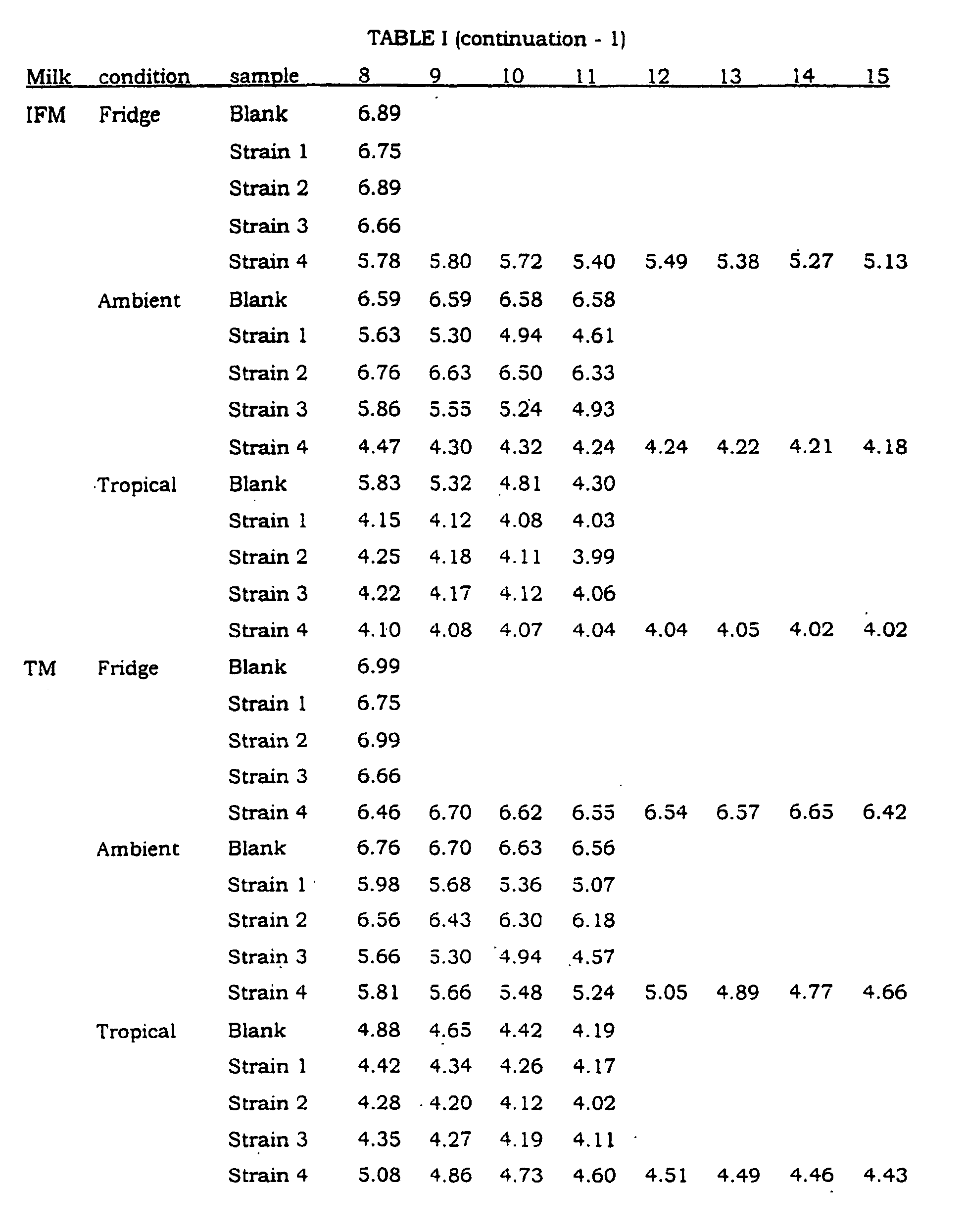

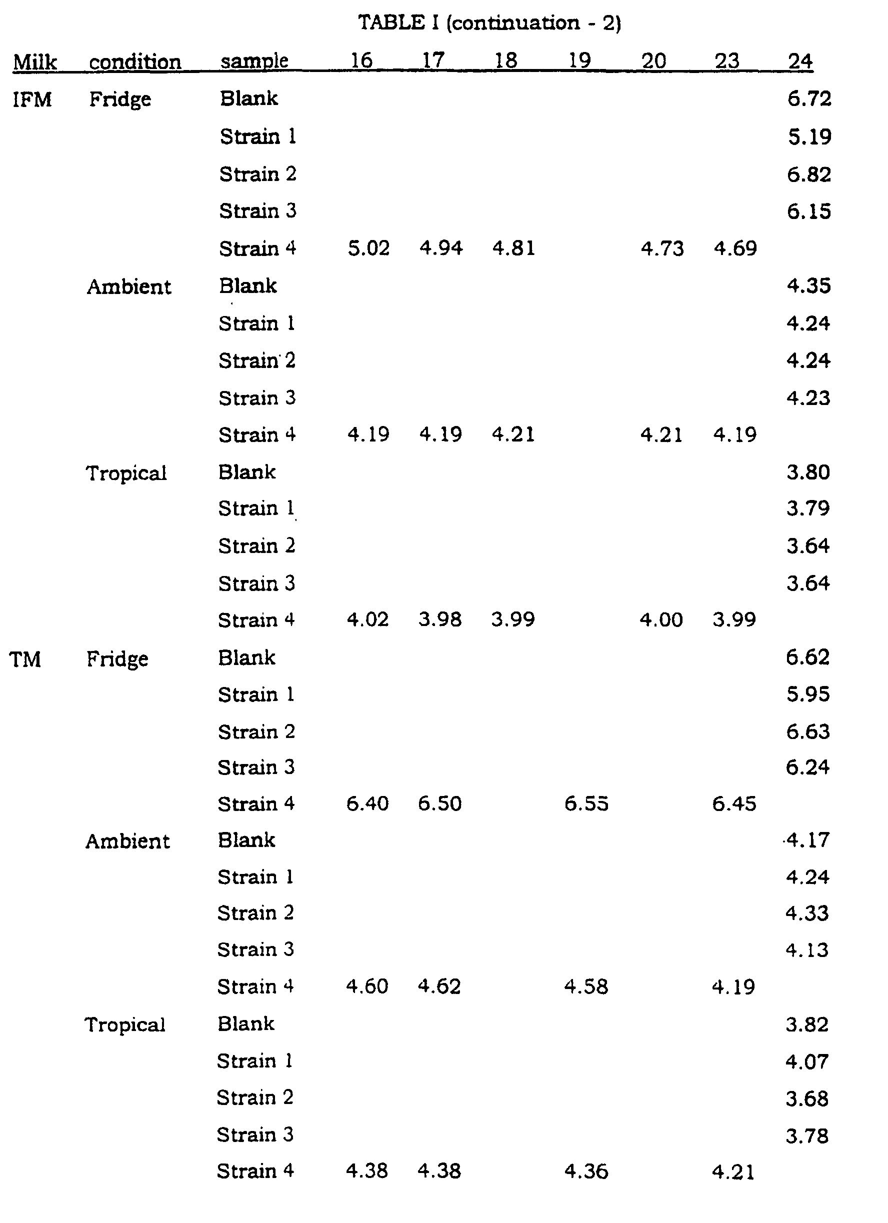

From TABLE I, it appears that both infant formula and therapeutic milks show a similar trend under cool conditions that is there is no drop in pH for any sample. Further a general trend is observed in infant formula milk and therapeutic milk in that only the samples containing RA024 show any pH drop at ambient temperature. That drop is initially noted after 8 hours storage and drops to a pH 4.5 in both cases after 11 hours.

At tropical conditions:
- Infant formula:: The pH shows an initial drop after 3 hours in all samples except the blank.
After 5 hours both samples containing RA024 have reached a pH of 4.
After 7 hours the sample containing MY087 only has reached a pH of 4.
After 11 hours the blank itself has drop to a pH of 4.5.
- Therapeutic milk:: All samples containing probiotic show a drop in pH after 2 hours.
All samples appear to act similarly. A after 5 hours reaching a pH of 4.5, except the blank which reaches a pH of 4.5 after 11 hours.

In this TABLE, tropical conditions would appears to be the optimum conditions to induce pH reduction i.e. culture growth, producing yoghurt.

The best culture is probably either the MA016 or the RA024. Both induce a quick drop in pH in both tested milks.

## Claims

1. Self-rehydrating container comprising a semi-permeable membrane which allows the preparation of sterile water solutions using osmotically driven filtration, containing a carbohydrate, a fermented milk product forming starter culture, milk powder and optionally other edible solutes.

2. Self-rehydrating container according to claim 1, **characterized in that** the carbohydrate is selected from the group consisting of lactose, sucrose and dextrose and preferably is lactose.

3. Self-rehydrating container according to claim 1 or 2, **characterized in that** the container is divided into two compartments separated by a non-permanent seal, a watertight compartment containing a fermented milk product forming starter culture, milk powder and optionally other edible materials, and a second osmotically active compartment containing a carbohydrate and optionally other osmotically active solutes.

4. Self-rehydrating container according to claim 3, **characterized in that** the watertight compartment is also oxygen-tight.

5. Yoghurt production process **characterized in that** it comprises the steps of
a) immersing in water a self-rehydrating container comprising a semi-permeable membrane and containing a carbohydrate, a yoghurt forming starter culture, milk powder and optionally other solutes;
b) leaving the container immersed until the filtered water has reached a sufficient level; and
c) optionally, keeping the bag at a temperature above 25°C for a sufficient further period of time allowing the fermented milk product to be formed.

6. Yoghurt production process using a self-rehydrating container according to any one of claims 3 or 4 comprising
a) immersing the container in water,
b) leaving the container immersed until the filtered water has reached a sufficient level,
c) breaking the non-permanent seal separating the two compartments,
d) allowing the watertight compartment to be filled with the sterile water of the other compartment,
e) allowing the starter culture and milk powder to dissolve, and
f) keeping the bag at a temperature above 25°C and allowing for the fermented milk product to be formed.

## Patentansprüche

1. Selbst-rehydratisierendes Behältnis, das eine semipermeable Membran aufweist, die die Herstellung von sterilen Wasserlösungen unter Verwendung einer osmotisch ablaufenden Filtration erlaubt, und Kohlehydrat, ein eine Startkultur bildendes fermentiertes Milchprodukt, Milchpulver und wahlweise weitere Nahrungsmittelprodukte enthält.

2. Selbst-rehydratisierendes Behältnis nach Anspruch, **dadurch gekennzeichnet, daß** das Kohlehydrat aus einer Gruppe aus Laktose, Saccharose oder Dextrose ausgewählt ist und vorzugsweise Laktose ist.

3. Selbst-rehydratisierendes Behältnis nach Anspruch 1 oder 2, **dadurch gekennzeichnet, daß** das Behältnis in zwei Kammern geteilt ist, die durch eine nicht dauerhafte Dichtung getrennt sind, wobei eine wasserdichte Kammer ein eine Startkultur bildendes fermentiertes Milchprodukt, Milchpulver und wahlweise weitere Nahrungsmittel enthält und eine zweite osmotisch aktive Kammer ein Kohlehydrat und wahlweise weitere osmotisch aktive Lösungsprodukte enthält.

4. Selbst-rehydratisierendes Behältnis nach Anspruch 3, **dadurch gekennzeichnet, daß** die wasserdichte Kammer auch sauerstoffdicht ist.

5. Herstellungsverfahren für Joghurt, **dadurch gekennzeichnet, daß** es die folgenden Schritte aufweist:
a) Ein selbst-rehydratisierendes Behältnis, das eine semipermeable Membran aufweist und ein Kohlehydrat, ein eine Startkultur bildendes Joghurt, Milchpulver und wahlweise weitere Lösungsprodukte enthält, wird in Wasser getaucht;
b) das Behältnis wird eingetaucht belassen, bis das gefilterte Wasser ein ausreichendes Niveau erreicht hat und
c) wahlweise wird das Behältnis auf einer Temperatur oberhalb 25° C für eine ausreichende weitere Zeitdauer gehalten, die das Ausbilden des fermentierten Milchprodukts erlaubt.

6. Herstellungsverfahren für Joghurt unter Verwendung eines selbst-rehydratisierenden Behältnisses nach einem der Ansprüche 3 bis 4, das folgende Schritte aufweist:
a) Das Behältnis wird in Wasser eingetaucht;
b) das Behältnis wird eingetaucht belassen, bis das gefilterte Wasser ein ausreichendes Niveau erreicht hat;
c) die nicht dauerhafte Dichtung, die die beiden Kammern trennt, wird aufgebrochen;
d) das Füllen der wasserdichten Kammer mit dem sterilen Wasser aus der anderen Kammer wird ermöglicht;
e) es wird der Starterkultur und dem Milchpulver ermöglicht, sich zu lösen und
f) das Behältnis wird auf einer Temperatur oberhalb 25° C gehalten, und die Ausbildung des fermentierten Milchproduktes wird ermöglicht.

## Revendications

1. Récipient d'auto-réhydratation comprenant une membrane semi-perméable qui permet la préparation de solutions aqueuses stériles en utilisant une filtration provoquée par osmose, contenant un carbohydrate, un produit laitier fermenté formant une culture d'ensemencement, de la poudre de lait et, en option, d'autres solutés comestibles.

2. Récipient d'auto-réhydratation selon la revendication 1, **caractérisé en ce que** le carbohydrate est choisi dans le groupe constitué du lactose, du saccharose et du dextrose et est, de préférence, du lactose.

3. Récipient d'auto-réhydratation selon la revendication 1 ou 2, **caractérisé en ce qu'**il est divisé en deux compartiments séparés par un joint d'étanchéité non permanent, un compartiment étanche à l'eau contenant un produit laitier fermenté formant une culture d'ensemencement, de la poudre de lait et, en option, d'autres matières comestibles, et un second compartiment actif par osmose et contenant un carbohydrate et, en option, d'autres solutés actifs par osmose.

4. Récipient d'auto-réhydratation selon la revendication 3, **caractérisé en ce que** le compartiment étanche à l'eau est également étanche à l'oxygène.

5. Procédé de production de yaourts, **caractérisé en ce qu'**il comprend les étapes consistant :
a) à immerger dans l'eau un récipient d'auto-réhydratation comprenant une membrane semi-perméable et contenant un carbohydrate, un yaourt formant une culture d'ensemencement, de la poudre de lait et, en option, d'autres solutés;
b) à laisser le réceptacle immergé jusqu'à ce que l'eau filtrée ait atteint un niveau suffisant; et
c) en option, à maintenir le récipient à une température supérieure à 25°C pendant une période de temps supplémentaire suffisante pour permettre la formation du produit laitier fermenté.

6. Procédé de production de yaourts utilisant un récipient d'auto-réhydratation selon l'une quelconque des revendications 3 et 4, comprenant les étapes consistant :
a) à immerger le récipient dans de l'eau;
b) à laisser le récipient immergé jusqu'à ce que l'eau filtrée ait atteint un niveau suffisant;
c) à rompre le joint d'étanchéité non permanent séparant les deux compartiments;
d) à permettre au compartiment étanche à l'eau d'être rempli par l'eau stérile de l'autre compartiment;
e) à laisser la culture d'ensemencement et la poudre de lait se dissoudre; et
f) à maintenir le récipient à une température supérieure à 25°C et à permettre la fomation du produit laitier fermenté.
